# EUROPEAN PATENT APPLICATION

(11) **EP 2 538 540 A1**
(43) Date of publication of application: **26.12.2012**
(21) Application number: 11170513.3
(22) Date of filing: 20.06.2011
(51) Int. Cl.: H02M 5/451

(54) **Short circuit safe rectifier stage for a subsea power grid**

(71) Applicant: SIEMENS AKTIENGESELLSCHAFT, 80333 München (DE)
(72) Inventor: Haugan, Espen, 7052 Trondheim (NO)

(57) **Abstract**

It is described a rectifier stage (251) for converting an input AC voltage to an output voltage, the rectifier stage comprising: a first AC input terminal (255); a second AC input terminal (257), wherein the input AC voltage is applicable between the first input terminal and the second input terminal; a first DC output terminal (267); a second DC output terminal (268); a first thyristor (261) connected between the first DC output terminal (267) and the first AC input terminal (255); a second thyristor (263) connected between the first DC output terminal (267) and the second AC input terminal (257); a gate control circuit (272) adapted and connected to control a first conductance state of the first thyristor (261) and to control a second conductance state of the second thyristor (263) such that the first thyristor and the second thyristor provide a rectified AC voltage between the first DC output terminal (267) and the second DC output terminal (268) as the output voltage, wherein the gate control circuit has a current signal input terminal for receiving a current signal indicative of a current flowing from the first AC input terminal (255) through the first thyristor (261) to the first DC output terminal (267), wherein the control circuit is arranged and connected to control, based on the current signal, the first conductance state of the first thyristor.

## Description

### Field of invention

The present invention relates to a, in particular short circuit safe, rectifier stage, to an AC-AC converter, to a converter arrangement, to a power supply arrangement, to a subsea power grid and to a method for converting an input AC voltage to an output voltage. In particular, the rectifier stage, the AC-AC converter, the converter arrangement, the power supply arrangement, the subsea power grid, and the method for converting an input AC voltage to an output voltage may be applied for powering a variable speed drive, in particular located below a sea level, such as in a depth between 1000 m and 4000 m. The variable speed drive may in turn be connected to or comprise a pump or to a compressor for supplying electric energy having varying power.

### Background

An oil or a gas exploration site below the sea level may require operation of a motor, a pump or a compressor in order to enable the exploration or conveying operation. In particular, in an oil reservoir or in a gas reservoir it may be required to keep a particular pressure, in order to enable the conveying of oil or or gas from the oil reservoir or gas reservoir. In particular, the pump, compressor or motor may be required to be operated under varying power consumption, in order to appropriately adjust e.g. the pressure in the oil reservoir or gas reservoir. Therefore, an electrical power supply is required. In particular, it may be required to deliver electrical energy from a topside equipment above the sea level to the subsea location located e.g. 1000 m to 4000 m below the sea level.

It has however been observed that it may be difficult to supply electric energy in particular to a variable speed drive which is located in a great depth below the sea level.

There may be a need for a rectifier stage, an AC-AC converter, a converter arrangement, a power supply arrangement, a subsea power grid and a method for converting an input AC voltage to an output voltage, wherein a secure and safe operation may be ensured, in particular for protecting components from damage.

The need may be satisfied by the subject-matter of the independent claims. Exemplary embodiments are specified in the dependent claims.

### Summary of the Invention

According to an embodiment of the present invention, it is provided a rectifier stage for converting an input AC voltage to an output voltage, the rectifier stage comprising: a first AC input terminal; a second AC input terminal, wherein the input AC voltage is applicable between the first input terminal and the second input terminal; a first DC output terminal; a second DC output terminal; a first thyristor connected between the first DC output terminal the first AC input terminal; a second thyristor connected between the first DC output terminal the second AC input terminal; a gate control circuit adapted and connected to control a first conductance state of the first thyristor and to control a second conductance state of the second thyristor such that the first thyristor and the second thyristor provide a rectified AC voltage between the first DC output terminal and the second DC output terminal as the output voltage. Further, the gate control circuit has a current signal input terminal for receiving a current signal indicative of a current flowing from the first AC input terminal through the first thyristor to the first DC output terminal, wherein the control circuit is arranged and connected to control, based on the current signal, the first conductance state of the first thyristor.

By controlling the first conductance state of the first thyristor, depending on the current signal, the first AC input terminal may be disconnected from the first DC output terminal such that it is avoided that a current flows from the first AC input terminal to the first DC output terminal. Thereby, an effective short circuit power protection may be provided.

Thereby, in particular a protection method using fuses may be avoided. In particular, using subsea fuses may not be an appropriate solution for providing short circuit power protection, since the fuses may be based on a design adapted or designed to be located at atmospheric surroundings (having an environment pressure of 1 bar). In particular, when the rectifier stage is to be used in a subsea operation a high pressure may prevail and there may be a dielectric fluid exposed environment for the rectifier stage which may render the usage of fuses inappropriate. Therefore, in particular for subsea operations a short circuit power protection method and arrangement is preferred which does not require fuses. In particular, the rectifier stage may be a component of a converter arrangement, such as a variable frequency drive, in particular of a subsea variable frequency drive, which can be used to supply electric energy to an electric motor for subsea operation. In particular, the rectifier stage may be used in a converter which has been assembled to a power supply arrangement, also referred to as a cell power supply arrangement comprising a number of power cells. The rectifier stage can be part of a power cell, with a multilevel converter comprising a number of such power cells.

In particular, the rectifier stage may be placed in a pressurized dielectric fluid filled environment, in particular oil filled environment.

In this environment rotating equipment, such as motors, may not be advantageous, because of potential mechanical faults in moving parts. Thus, a circuit breaker may not be a preferred solution for the subsea application. In contrast, the thyristor used in the rectifier stage according to this embodiment of the present invention does not have any mechanical moving parts and does not have the defined open circuit as a circuit breaker or a fuse.

In particular, the thyristor-based rectifier bridge or rectifier stage may advantageously be used for providing a short circuit protection, by stopping the conductance of the thyristor in case of a cell short circuit, for example. Thereby, fuses are not needed to disconnect the cell from the grid, wherein the electrical power may be in particular supplied using a long cable running from a topside main energy supply to the subsea operation's side a few thousand meters below the sea level.

In particular, if a short circuit is happening inside the rectifier stage or in a converter arrangement or in a power supply arrangement according to embodiments of the present invention, the current through the conducting thyristor may be sensed via the current signal. Based on the received current signal the first thyristor may be shut off in a fast manner. In this way, the first thyristor may see approximately one half sine wave before the short circuit may be stopped by the gate control circuit supply the appropriate control signal to the first thyristor.

The rectifier stage may convert an alternating current (AC) which may periodically reverses direction to a direct current (DC) which may be only in one direction. In particular, the input AC voltage between the first AC input terminal and the second AC input terminal is converted to the output voltage using the rectifier stage, wherein the output voltage may be a rectified AC voltage resulting from rectifying the input AC voltage. The rectified AC voltage may be a voltage in only one direction which however may fluctuate or oscillate (according to the frequency (being one divided by the period) of the input AC voltage) to a particular degree, thus not being constant, wherein its amplitude may be the peak of the voltage taken over one period of the input AC voltage. In particular, the rectified AC voltage is provided between the first DC output terminal and the second DC output terminal.

For producing the rectified AC voltage the first thyristor is connected between the first DC output terminal and the second DC output terminal (in particular an anode of the first thyristor is connected to the second DC output terminal and a cathode of the first thyristor is connected to the first DC output terminal) and further the first thyristor (in particular the anode of the first thyristor) is connected to the first AC input terminal. Thus, the first thyristor connected between the first DC output terminal and the first AC input terminal conducts a current from the first AC input terminal to the first DC output terminal, when in the conducting state.

Further, an anode of the second thyristor may be connected to the second DC output terminal and a cathode of the second thyristor may be connected to the first DC output terminal. Further, the anode of the second thyristor may be connected to the second AC input terminal. In other embodiments the anode and the cathode of the first thyristor may switch places and also the anode and the cathode of the second thyristor may switch places.

The gate control circuit may have at least a first output terminal and a second output terminal, wherein the first output terminal of the gate control circuit may be connected to a gate of the first thyristor and wherein the second output terminal of the gate control circuit may be connected to a gate of the second thyristor. The gate control circuit may be adapted to supply a first control signal to the first output terminal of the gate control circuit and supply a second control signal to the second output terminal of the gate control circuit. The first control signal may control the first conductance state of the first thyristor, such that if the first control signal is above a first threshold, the first thyristor may be in a conducting state for connecting (or conducting a current from) the first AC input terminal to the first DC output terminal. Further, the second control signal generated by the gate control circuit may control the second conductance state of the second thyristor, such that the second thyristor may be in a conducting state (conducting a current between) connecting the second AC input terminal and the first DC output terminal, if the second control signal is above a second threshold. In particular, the first control signal and/or the second control signal may oscillate in accordance or in synchronization with a frequency of the input AC voltage applied between the first AC input terminal and the second AC input terminal.

In particular the gate control circuit may have input terminals for receiving the input AC voltage. The gate control circuit may comprise one or more semiconductor integrated circuits and may be supplied with electric energy using the input AC voltage.

In particular, the rectifier stage may not have any electrical connection to an electrical ground. In particular, the rectifier stage may be free floating, thus the rectifier stage may be kept at an arbitrary potential relative to an electrical ground. The rectifier stage may be a half wave rectifier stage or in particular a full wave rectifier stage.

In particular, the input AC voltage may be a three-phase AC input voltage, wherein a first AC input terminal, a second AC input terminal and a third AC input terminal are provided for supplying the three-phase AC input voltage. In particular, the rectified AC voltage may be a three-phase half wave rectified voltage or a three-phase full wave rectified voltage. The first thyristor and/or the second thyristor may be a solid-state semiconductor device with four layers of alternating N and P-type material. They may be bistable switches conducting when their gate receives a current pulse, such as the first control signal and/or the second control signal, from the gate control circuit. The first thyristor and the second thyristor may continue to conduct (being in their conducting state), while they are forward biased (that is while the voltage across the thyristor is not reversed).

Using a first thyristor and a second thyristor (and in particular also a third thyristor, when the input AC voltage is a three-phase input voltage) may have the advantage over using diodes that the conductance states of the individual thyristors may be controlled in order to adjust the amplitude of the rectified AC voltage to be at least approximately constant, even if the amplitude of the input AC voltage varies, in particular in a range between 10 % and 30 %. Thereby, a capacitor having a high rated voltage may be avoided.

A rectified constant DC voltage can be obtained by constant controlling the thyristor firing angle as is known form SCR theory. By having a sufficient high AC voltage the DC voltage can be controlled to the nominal voltage within the specified voltage variation area. In particular, if the amplitude of the AC voltage (being in particular the maximum voltage taken over one period of oscillation) is larger (in particular by 10% and 40%) than a nominal amplitude, the thyristor(s) can be controlled such that the amplitude of the rectified AC voltage (or the DC voltage) does increase by between 0% and 10%, in particular stays constant.

In particular, the rectified AC voltage may be a voltage in one direction (in particular being above or below a particular threshold during a whole period of oscillation of the input AC voltage). The rectified AC voltage may be characterized by an amplitude relative to a threshold voltage, wherein the rectified AC voltage oscillates during a period of the input AC voltage. The amplitude of the rectified AC voltage may be defined as the maximum of the rectified AC voltage taken over one period of the input AC voltage. Similarly, the amplitude of the input AC voltage may be defined as the maximum of the input AC voltage over one period of the input AC voltage.

A variation of the amplitude of the input AC voltage may for example be caused by varying loads connected to the rectifier stage or varying cable length supplying electric energy to the rectifier stage. Increasing or decreasing the amplitude of the input AC voltage in a range between 10 % and 30 % will lead to an amplitude of the rectified AC voltage varying not more than 10% around a nominal value. Thereby, a load connected to the rectifier stage, in particular via an AC-converter stage, may be operated in a safe manner and further expensive voluminous capacitors in the rectifier stage may be avoided.

In particular, the rectifier stage may be used for applications with power requirements ranging for 4 MVA to 8 MVA, in particular in a depth of between 1000 m and 3000 m below the sea level. In particular, the rectifier stage may be part of a variable speed drive supplying power to an application having such power rating.

In particular, the input AC voltage may be supplied using a cable connected to a topside equipment delivering the electrical energy. In particular, the cable may be 150 km - 300 km long. In particular, large voltage variations in the input AC voltage may occur when using such a long cable. The voltage variation of the input AC voltage may take place both transiently (some few periods of the input AC voltage) and over long terms (variations over minutes). In a conventional system the subsea equipment connected to the conventional rectifier stage may have experienced these voltage variations and may not have been operated appropriately. The rectifier stage comprising the thyristors may reduce the problems caused by voltage variations of the input AC voltage.

According to an embodiment of the present invention, the rectifier stage further comprises a current transformer (in particular close of on the first AC input terminal) arranged for sensing (in particular by inductive coupling) the current flowing from the first AC input terminal through the first thyristor for providing the current signal. In particular, the current transformer may inductively sense the current flowing from the first AC input terminal through the first thyristor to the first DC output terminal. Thereby, an efficient detection sensor may be provided.

The current transformer may have a primary winding, a magnetic core, and a secondary winding. The alternating current flowing in the primary may produce a magnetic field in the core, which then induces a current in the secondary winding circuit. The primary and secondary circuits may efficiently be coupled, so that the secondary current bears an accurate relationship to the primary current. The current transformer (CT) may comprise a wire wrapped many times around a silicon steel ring passed over the circuit or conductor being measured. The CT's primary circuit therefore may consist of a single 'turn' of conductor, with a secondary of many hundreds of turns. The primary winding may be a permanent part of the current transformer, with a heavy copper bar to carry current through the magnetic core.

According to an embodiment of the present invention, the first conductance state is controlled by the gate control circuit to be non-conducting, if the current signal indicates that the current is above a current threshold. Thereby, a simple control mechanism may be provided to sense a short circuit and react on the sensed short circuit by interrupting a connection between the first AC input terminal and the first DC output terminal.

According to an embodiment of the present invention, the current signal is further indicative of a further current flowing from the second AC input terminal through the second thyristor to the first DC output terminal. Thereby, in particular, the gate control circuit may be arranged and connected to control, based on the current signal also being indicative of the further current, the second conductance state of the second thyristor. Thereby, in case that the further current is above a further current threshold, the gate control circuit may control the second thyristor in order to interrupt a connection between the second AC input terminal and the second DC output terminal.

Thereby, currents flowing through a number of phases of the AC input voltage may be sensed and if one or more of these currents exceed(s) a current threshold, the thyristor connected to the respective phase may be shut off to avoid damage to components of the rectifier stage or any arrangement into which the rectifier stage is included or comprised.

According to an embodiment of the present invention, the gate control circuit controls the first conductance state and the second conductance state such that an amplitude of the rectified AC voltage (occurring between the first DC output terminal and the second DC output terminal) is constant (or at least approximately constant) upon varying an amplitude of the input AC-voltage. Thereby, the rectifier stage may provide a predetermined amplitude of the rectified AC voltage, when no short circuit is detected. Thereby, the rectifier stage may advantageously be used in a converter arrangement of a variable speed drive.

According to an embodiment of the present invention, the gate control circuit has a further input terminal for electrically or optically receiving information about a variable speed drive (or a condition or state of the variable speed drive or electrical or electronic properties of the variable speed drive) which receives electric energy via the rectifier stage (and potentially via further components such as a DC-AC converter stage), wherein the first conductance state (and/or in particular the second conductance state) is controlled by the gate control circuit to be non-conducting, if the information about the variable speed drive indicates an error relating to (or in particular occurring at) the variable speed drive. In particular, the rectifier stage can be part or variable speed drive, and the gate control circuit can be adapted to interface a controller of the variable speed drive via the input terminal. Thus, damages to components of the rectifier stage or of the overall variable speed drive may be reduced or even avoided by shutting off electric energy supply to the variable speed drive. The rectifier stage may thus implement a short circuit protection or an overvoltage protection or both for the variable speed drive.

According to an embodiment of the present invention, the gate control circuit is adapted to control the first conductance state and the second conductance state in order to adjust the amplitude of the rectified AC voltage to deviate less than 10 %, in particular less than 5 %, further in particular less than 2 %, from a target amplitude of the rectified AC voltage, when the amplitude of the input AC voltage deviates from a nominal amplitude of the input AC voltage in a range between 10 % and 30 %, in particular between 20 % and 30 %.

Thus, in particular, the variation of the amplitude of the rectified AC voltage is less than the variation of the amplitude of the input AC voltage. Thereby, a pump, a compressor or a motor being supplied with electric energy using the rectifier stage (in particular also further using an AC-converter stage) may be smoothly operated, in particular operated using varying power supply.

According to an embodiment of the present invention, the rectifier stage further comprises a capacitor (an electrical element being adapted for storing an electrical charge) connected between the first DC output terminal and the second DC output terminal for smoothing the rectified AC voltage to generate an output DC voltage as the output voltage. Thus, the output DC voltage is obtained between the first DC output terminal and the second DC output terminal. In particular, the output DC voltage may vary to a smaller degree over one period of the input AC voltage than the rectified AC voltage. Thereby, the capacitor may be dimensioned such that it is able to smoothen the rectified AC voltage having an amplitude in a range deviating less than 10 % from a target amplitude of the rectified AC voltage. Thereby, the size of the rectifier stage may be reduced compared to a conventional rectifier stage by in particular reducing the size of the capacitor.

According to an embodiment of the present invention, the gate control circuit is adapted to control the first conductance state and the second conductance state in order to adjust the output DC voltage to deviate less than 10 %, in particular less than 5 %, further in particular less than 2 %, from a target output DC voltage, when the amplitude of the input AC voltage deviates from a nominal amplitude of the input AC voltage in a range between 10 % and 40 %, in particular between 20 % and 40 %. Thereby, in particular, the variation (of the average) of the output DC voltage is less than the deviation of the amplitude of the input AC voltage from the nominal amplitude of the input AC voltage. Thus, the rectifier stage may be used in a converter of a variable speed drive for supplying an electric motor with electric energy.

According to an embodiment of the present invention, the rectifier stage further comprises another first thyristor connected between the first DC output terminal and the second DC output terminal in series with the first thyristor and connected to the first AC input terminal, the first AC input terminal being connected between the first thyristor and the other first thyristor; and another second thyristor connected between the first DC output terminal and the second DC output terminal in series with the second thyristor and connected to the second AC input terminal, the second AC input terminal being connected between the second thyristor and the other second thyristor, wherein the gate control circuit is further adapted and connected to control another first conductance state of the other first thyristor and to control another second conductance state of the other second thyristor such that the first thyristor, the second thyristor, the other first thyristor and the other the second thyristor together provide the rectified AC voltage between the first DC output terminal and the second DC output terminal.

Thereby, a full wave rectifier stage may be provided. In particular, the rectifier stage may further comprise another third thyristor which is connected in series with the third thyristor, in order to provide a three-phase rectifier stage. In particular, a three-phase full wave rectifier stage may be provided. Thereby, the rectifier stage may be used in an appropriate way using conventionally available three-phase input AC voltage.

According to an embodiment of the present invention, it is provided an AC-AC converter for converting an input AC-voltage to an output AC-voltage, the AC-AC converter comprising a rectifier stage according to an embodiment as described above; and a AC-converter stage connected between the first DC output terminal and the second DC output terminal of the rectifier stage and comprising a first AC output terminal and a second AC output terminal, the AC-converter stage being adapted to convert the output voltage, in particular the output DC voltage, generated by the rectifier stage to the output AC voltage between the first AC output terminal and the second AC output terminal.

In particular, in the AC-AC converter, the rectifier stage comprises the capacitor connected between the first DC output terminal and the second DC output terminal. The AC-converter stage may provide the output AC voltage to have a predetermined frequency which may be adjusted on demand. The AC-AC converter may in particular be part of a variable frequency drive (VFD) or variable speed drive (VSD). Such variable speed drive may comprise an electric motor or may be connected to an electric motor. The AC-AC converter can thus supply electric energy with a variable frequency to the electric motor, thereby driving the electric motor at variable speed. The variable speed drive may for example drive a pump or a compressor in a subsea oil or gas exploration process. The AC-AC converter may be supplied with electric energy from a topside equipment, wherein the topside equipment supplies energy via a long cable (such as 100 km - 500 km long) to the AC-AC converter. In particular, the AC-AC converter may represent a power cell which can be connected to other power cells in order to generate an output AC voltage having a predetermined adjustable frequency and predetermined adjustable amplitude. The variable frequency drive may thus comprise plural of such AC-AC converters in form of plural power cells.

According to an embodiment of the present invention, the AC-converter stage comprises a first controllable switch, in particular a first IGBT, connected to the first DC output terminal and to the second DC output terminal; and a second controllable switch, in particular a second IGBT, connected to the first DC output terminal and to the second DC output terminal, wherein the first controllable switch is connected to the first AC output terminal, wherein the second controllable switch is connected to the second AC output terminal.

Thereby, the first controllable switch and/or the second controllable switch may be semiconductor devices, such as transistors. In particular, the first controllable switch and/or the second controllable switch may be controlled at their respective gates by control signals generated by a further control circuit. In particular, the further control circuit may provide control signals having a desired frequency to generate the output AC voltage having a desired frequency.

In particular, the AC-converter stage may further comprise a further first controllable switch connected in series with the first controllable switch such that the series of the first controllable switch and the further first controllable switch is connected between the first DC output terminal and the second DC output terminal. Further in particular, the AC-converter stage may comprise a further second controllable switch connected in series with the second controllable switch, such that the series connection of the second controllable switch and the further second controllable switch is connected between the first DC output terminal and the second DC output terminal. Further, all controllable switches, i.e. the first controllable switch, the further first controllable switch, the second controllable switch and the further second controllable switch may have connected in parallel a respective diode.

In particular, the first AC output terminal may be connected between the first controllable switch and the further first controllable switch. In particular, the second AC output terminal may be connected between the second controllable switch and the further second controllable switch. Thereby, a compact AC-AC converter may be provided being able to provide the output AC voltage having a predetermined adjustable frequency and having a predetermined amplitude.

According to an embodiment of the present invention, a converter arrangement comprising a plurality of AC-AC converters according to an embodiment as described above is provided, wherein the AC-AC converters are connected in a series, wherein a second AC output terminal of one of the plurality of the AC-AC converters is connected to a first AC output terminal of a next (in the series) AC-AC converter of the plurality of the AC-AC converters in the series, respectively. Thereby, a series arrangement of power cells is provided which may in particular be used for a subsea equipment. According to an embodiment of the present invention, it is provided a power supply arrangement comprising a first converter arrangement according to an embodiment as described above and a second converter arrangement according to an embodiment as described above (and in particular a third converter arrangement according to an embodiment as described above). Therein, a first AC output terminal of a first AC-AC converter in the series of the first converter arrangement is connected to a first AC output terminal of a first AC-AC converter in the series of the second converter arrangement and a second AC output terminal of the a last AC-AC converter in the series of the first converter arrangement and a second AC output terminal of a last AC-AC converter in the series of the second converter arrangement are connectable to a load, in particular a motor, a pump or a compressor. Thereby, a variable speed drive may be provided.

According to an embodiment, it is provided a subsea power grid, comprising a power cable, in particular having a length between 100 km and 300 km, leading from above a sea level to a depth between 1000 m and 4000 m, in particular between 3000 m and 4000 m, below the sea level for supplying electric energy utilizing AC voltage to a subsea equipment; and at least one rectifier stage according to an embodiment as described above, the AC voltage being applied between the first AC input terminal and the second AC input terminal of the rectifier stage, and/or at least one AC-AC converter according to an embodiment as described above and/or at least one converter arrangement according to an embodiment as described above and/or at least one power supply arrangement according to an embodiment as described above.

It should be understood that any features (individually or in any combination) disclosed, described, mentioned or provided for a rectifier stage or for a AC-AC converter or for a converter arrangement or for a power supply arrangement or for a subsea power grid may also be provided, arranged for, applied for (individually or in any combination) to a method for converting an input AC voltage to an output voltage according to an embodiment and vice versa.

According to an embodiment of the present invention, it is provided a method for converting an input AC voltage to an output voltage, the method comprising applying the input AC voltage between a first AC input terminal and a second AC input terminal; controlling a first conductance state of a first thyristor and controlling a second conductance state of a second thyristor such that the first thyristor and the second thyristor provide a rectified AC voltage between a first DC output terminal and a second DC output terminal as the output voltage, wherein the first thyristor is connected between the first DC output terminal and the second DC output terminal and is connected to the first AC input terminal, wherein the second thyristor is connected between the first DC output terminal and the second DC output terminal and is connected to the second AC input terminal. Further, the method for converting the input AC voltage to the output voltage further comprises receiving a current signal (such as an electrical or optical signal) indicative of a current flowing from the first AC input terminal through the first thyristor to the first DC output terminal; and controlling, based on the current signal, the first conductance state of the first thyristor.

According to an embodiment of the present invention, the method for converting the input AC voltage to the output voltage is performed in a subsea operation, in particular during exploration of an oil and/or gas reservoir, in a depth between 1000 m and 4000 m, in particular between 3000 m and 4000 m, below a sea level. In particular, the electric energy may be supplied via a cable having a length between 100 km and 400 km from a topside main power supply.

According to an embodiment of the present invention, the method further comprises converting the output voltage generated between the first DC output terminal and the second DC output terminal to an output AC voltage (in particular using a DC-AC converter, in particular comprising plural IGBTs) ; connecting a load to the output AC voltage, wherein the controlling step is performed by a gate control circuit, the gate control circuit being part of a variable speed drive which comprises a variable speed drive controller, the gate control circuit having a further input terminal connected to an output terminal of the variable speed drive controller, in particular for receiving information about the condition or the state of the variable speed drive. Thereby, in case of a failure or a fault relating to the variable speed drive the energy supply to the variable speed drive may be interrupted, in order to reduce or even avoid damages to the variable speed drive or any other component of other equipment.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments. Similar elements (in structure and/or in function) may be denoted with similar reference signs which differ only in the first digit.
Fig. 1 schematically illustrates a subsea power grid according to an embodiment of the present invention;
Fig. 2 illustrates a circuit diagram of a AC-AC converter (or power cell) according to an embodiment of the present invention;
Figs. 3 and 4 illustrate graphs depicting three-phase AC voltage and currents, respectively, before and after the cell short circuit occurred.
Figs. 5 and 6 illustrate graphs showing the DC voltage and rectifier current, respectively, before and after the cell short circuit.
Figs. 7 and 8 illustrate a current through the first thyristor and the squared current times time value of the short circuit current, respectively.
Fig. 9 schematically illustrates a power supply arrangement comprising a plurality of AC-AC converters as illustrated in Fig. 2 according to an embodiment of the present invention.

### Detailed Description

The illustration in the drawings is in schematic form. It is noted that in different figures, similar or identical elements are provided with the same reference signs or with reference signs, which are different from the corresponding reference signs only within the first digit.

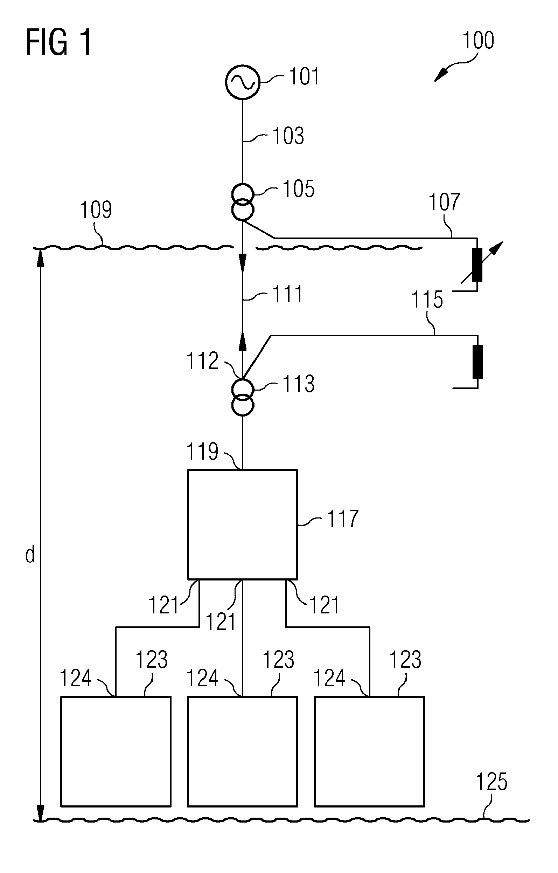

**Fig. 1** schematically illustrates a subsea power grid 100 according to an embodiment of the present invention. The power grid 100 comprises or is connected to a mains power supply 101 which may deliver a AC voltage having an amplitude of 132 kV and having a frequency of 60 Hz. Via a cable 103 the AC voltage is supplied to a topside transformer 105 which is dimensioned for 50 MVA, uk=22%, and which is adapted to transform the AC voltage from 132 kV to 90 kV. A topside SVC reactive compensation element 107 is connected to an output of the topside transformer 105 to enable reactive compensation. The mains supply 101, the topside transformer 105 and the topside reactive compensation 107 are located above a sea level 109.

A cable 111 having a length of 220 km (240 mm² copper wires) leads to a subsea location, where a subsea transformer 113 being dimensioned for 50 MVA 113 is located, which transforms the voltage of 90 kV to a voltage of 22 kV at an output of the subsea transformer 113, the transformer having an input 112. Further connected to the input 112 of the subsea transformer 113 is a subsea reactive compensation element 115 for enabling reactive compensation of the supplied AC voltage.

The output of the subsea transformer 113 is connected to a subsea main connection unit (SMCU) or a subsea switchgear unit (SSU) 117 which receives the electric power at an input terminal 119. The subsea main connection unit 117 comprises a number of output terminals 121 for distributing the electric power to a number of loads 123 having inputs 124 for supplying electric energy. Each load may comprise e.g. a variable speed drive and a motor. The loads 123 may be operated at 24 kV, 10.5 MVA, PF=0.97. The loads 123 may be located close to a sea ground 125 which may be located in a depth d between 3000 and 4000 m below the sea level 109.

In particular, the subsea power grid has a long step-out cable 111 with high capacitance. The cable 111 may be more or less dimensioned with a charging current low enough not to be overloaded during no load (only charging current) and full load (both charging current and active load current).

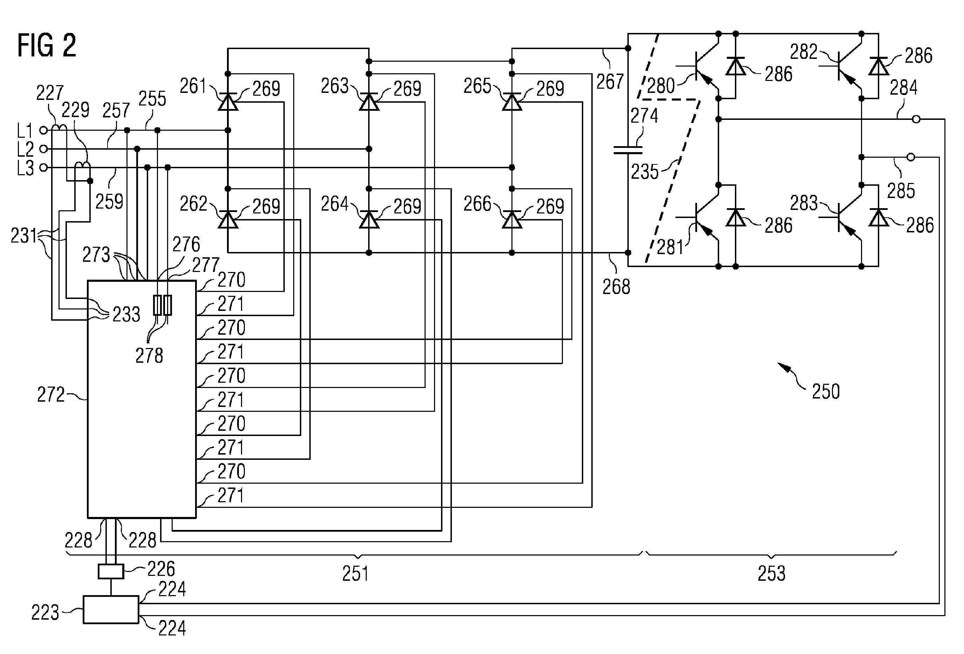

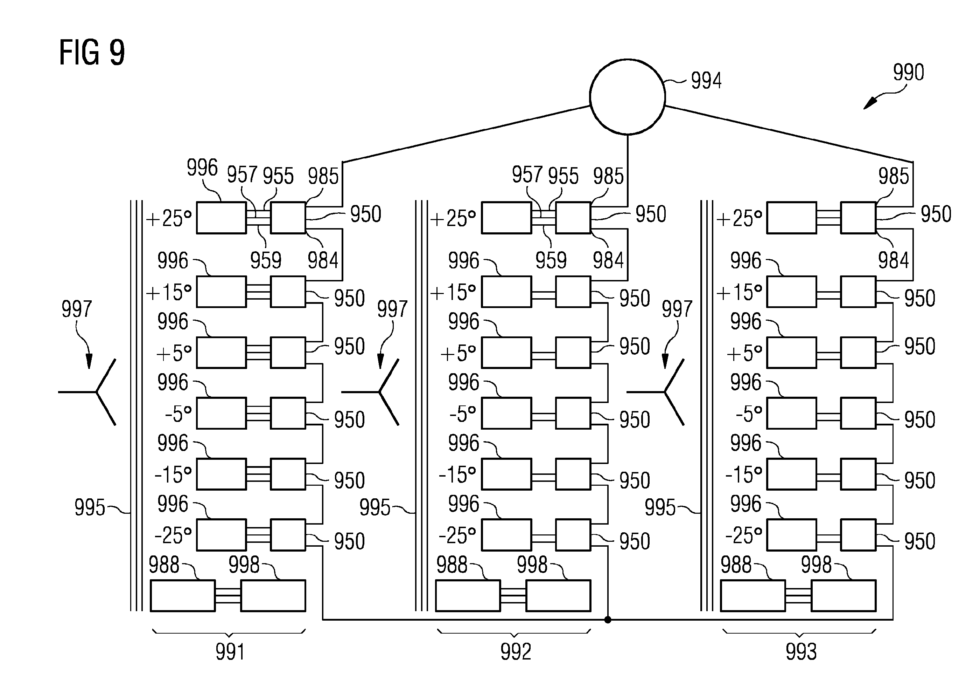

The variable speed drive comprised in the load 123 may be adapted or comprise a rectifier stage, an AC-AC converter, a converter arrangement, or a power supply arrangement according to an embodiment of the present invention. The loads 123 may for example comprise the AC-AC converter as illustrated in Fig. 2 or a drive topology as illustrated in Fig. 9.

**Fig. 2** illustrates a circuit diagram of an AC-AC converter 250 (also referred to as H bridge cell converter) according to an embodiment of the present invention. The AC-AC converter 250 comprises a rectifier stage 251 and an AC-converter stage 253. The rectifier stage 251 comprises a first AC input terminal 255, a second AC input terminal 257 and a third AC input terminal 259 for supplying a three-phase input AC voltage between pairs of terminals 255, 257, 259. The terminals 255, 257, 259 may correspond to the input terminals 119 of the subsea main connection unit 117 or to the inputs 124 of the loads 123, as is illustrated in Fig. 1.

The rectifier stage 251 further comprises a first thyristor 261, a further first thyristor 262, wherein the first terminal 255 is connected in between the first thyristor 261 and the further first thyristor 262. The rectifier stage 251 further comprises a second thyristor 263 and a further second thyristor 264 which is connected in series with the second thyristor 263, wherein the second AC input terminal 257 is connected between the second thyristor 263 and the further second thyristor 264. The rectifier stage 251 further comprises a third thyristor 265 and a further third thyristor 266 connected in series with the third thyristor 265, wherein the third AC input terminal 259 is connected between the third thyristor 265 and the further third thyristor 266.

The series connected first thyristor 261 and further first thyristor 262, the series connected second thyristor 263 and the further second thyristor 264, and the series connected third thyristor 265 and further third thyristor 266 are connected between a first DC output terminal 267 and a second DC output terminal 268. The gates 269 of the thyristors 261, 262, 263, 264, 265, 266 are connected to individual output terminals 270 of a gate control circuit 272 which is also comprised in the rectifier stage 251. Via the output terminals 270 the gate control circuit 272 is adapted to provide a current to the gates 269 of the thyristors and flowing through the cathode of the thyristors and flowing back to terminals 271 of the gate control circuit 272.

The gate control circuit 272 may also be referred to thyristor trigger pulse card.

The gate control circuit 272 comprises input terminals 273 via which the voltages detected or measured at the first AC input terminal 255, the second AC input terminal 257 and the third AC input terminal 259 can be supplied to the gate control circuit 272. The gate control circuit 272 may control conductances of the thyristors in order to keep the voltage between the first DC output terminal 267 and the second DC output terminal 268 at least approximately constant (in particular keep an amplitude of this voltage constant or below a nominal amplituded) such that a capacitor 274 also comprised in the rectifier stage 251 may only be dimensioned to have a nominal rated voltage for smoothening the voltage between the terminals 267 and 268.

In a conventional system the capacitor 274 would be required to handle large voltage variations leading to a large sized capacitor. In particular, by increasing the voltage for the capacitor bank 274 with 1.3 the volume will increase by the square of this value, i.e. 1.3² = 1.56. To void this, the thyristor based rectifier stage 251 may be used to actively reduce the overvoltages for the capacitor bank 274.

The thyristor based rectifier bridge (also called rectifier stage) 251 may be used as a replacement for the standard diode rectifier bridge used for a conventional multilevel cascade connected H bridge design. The thyristors comprised in the rectifier stage 251 are supplied with trigger pulses from the gate control circuit 272 via output terminal 270.

The cell thyristor control system or gate control circuit 272 may be placed on the cell and may be supplied with power from the cell. In particular, as is illustrated in the embodiment of the AC-AC converter 250 illustrated in Fig. 2, the gate control circuit 272 is supplied with electrical energy from two phases of the input AC voltage, namely the first AC input terminal 255 and the third AC input terminal 259 using the supply input terminals 276 and 277. Before the cell 250 is in operation, no energy is stored in the cell capacitor bank 274. Due to this the thyristor control power needs to be connected in front of the thyristor rectifier bridge.

Further, the gate control circuit 272 needs to be internally secured for short circuits. In Fig. 2 fuses 278 are depicted on the input terminals 276 and 277 of the gate control circuit 272. The fuses 278 may be a thin wire of copper or silver or a narrow copper path on the printed circuit board layout in oil environment. The fuses 278 may also be replaced with a high ohmic resistance that assure a low and safe short circuit current in case of a short circuit on the control board 272.

By keeping the DC voltage to which the capacitor bank 274 is connected constant the capacitor size (the space or volume or weight) of the capacitor 274 can be reduced to be less than 50 % of the total cell volume of the AC-AC converter 250.

The AC-AC converter 250 illustrated in Fig. 2 further comprises the AC-converter stage 253. The AC-converter stage 253 comprises a first controllable switch 280 and a further first controllable switch 281 which is connected in series to the first controllable switch 280, wherein a first AC output terminal 284 is connected in between the first controllable switch 280 and the further first controllable switch 281. Further, the AC-converter stage 253 comprises a second controllable switch 282 and a further second controllable switch 283 which is connected in series to the second controllable switch 282, wherein a second AC output terminal 285 is connected between the second controllable switch 282 and the further second controllable switch 283. Gates of the controllable switches 280, 281, 282, 283 are controlled by input signals generated by not illustrated control circuits. In parallel to the controllable switches 280, 281, 282, 283 respective diodes 286 are connected.

In particular, the series connected first controllable switch 280 and further first controllable switch 281 are connected between the first DC output terminal 267 and the second DC output terminal 268. The controllable switches 280, 281, 282, 283 are controlled such that at the first AC output terminal 284 and the second AC output terminal 285 an output AC voltage having a predetermined frequency and amplitude is generated.

In Fig. 2 a load 223 is powered by the converter 250 by connecting the load 223 to the first AC output terminal 284 and the second AC output terminal 285 by lines to power input terminals 224.

The rectifier stage 250 illustrated in Fig. 2 further comprises a current transformer 227 which is inductively coupled to the first AC input terminal (or a conductor thereof) 255, wherein the current transformer 227 is adapted to measure a current flowing from the first AC input terminal 255 through the first thyristor 261 to the first DC output terminal 267. Further, the rectifier stage 251 illustrated in Fig. 2 comprises another current transformer 229 which is arranged close to the third AC input terminal 259 and is adapted to measure a current flowing from the first AC input terminal 259 through the third thyristor 265 to the first DC output terminal 267.

Instead of measuring the current flowing from the third AC input terminal 259 to the first DC output terminal 267 a current transformer could also be arranged to be inductively coupled to the second AC input terminal 257 to measure the current flowing from the second AC input terminal 257 through the second thyristor 263 to the first DC output terminal 267. Current signals indicating or indicative of currents flowing from one, two or all AC input terminals 255, 257, 259 to the first DC output terminal 267 (via respective thyristors 261, 263 and/or 265) are supplied via signal lines 231 to three input terminals 233 of the gate control circuit 272.

In particular, thereby, the gate control circuit 272 receives information regarding currents flowing via the AC input terminals to the rectifier stage 251. If the current signal indicates that one of the measured currents is above a threshold, the gate control circuit 272 controls the associated thyristor to adopt a non-conducting state, in order to interrupt a current flowing from the respective AC input terminal to the first DC output terminal 267.

As is depicted in Fig. 2 a cell short circuit 235 may for example occur between the first DC output terminal 267 and the second DC output terminal 268 causing high currents to flow from the AC input terminal 255, 257 and 259 to the DC output terminals 267, 268.

According to an alternative embodiment the further first thyristor 262, the further second thyristor 264 and also the further third thyristor 266 may be replaced each with a diode (not illustrated), to simplify the rectifier stage 250. In this case, only the first thyristor 261, the second thyristor 263 and the third thyristor 265 would be comprised in the rectifier stage 251 and would be controlled by the gate control circuit 272.

To illustrate the function of the short circuit protection, a cell (also referred to as AC-AC converter according to an embodiment of the present invention) in an 18 cell multilevel cascade H bridge drive of 6 MVA with a thyristor inverter has been simulated with a short circuit in the cell directly after trigger pulses to the first thyristor 261, as illustrated in Fig. 2. For example, the 18 cell multilevel cascade H bridge may also be referred to as a power supply arrangement according to an embodiment of the present invention, such as the power supply arrangement illustrated in Fig. 9 and described below.

A controller 226 (variable speed drive controller) controls the operation of the variable speed drive which comprises the converter 250. It may for example control the frequency of the AC voltage that is given out. The controller 226 may be connected to the load 223, which can comprise an electric motor. The controller 226 controls and receives information from the variable speed drive and may further receive information of load 223. The controller is adapted to supply information about the variable speed drive to the gate drive circuit 272 via input terminals 228. In case of a fault on the variable speed drive indicated by the received information, the gate control circuit 272 shuts off one or more of the thyristors 261, 262, 263, 264, 265, 266.

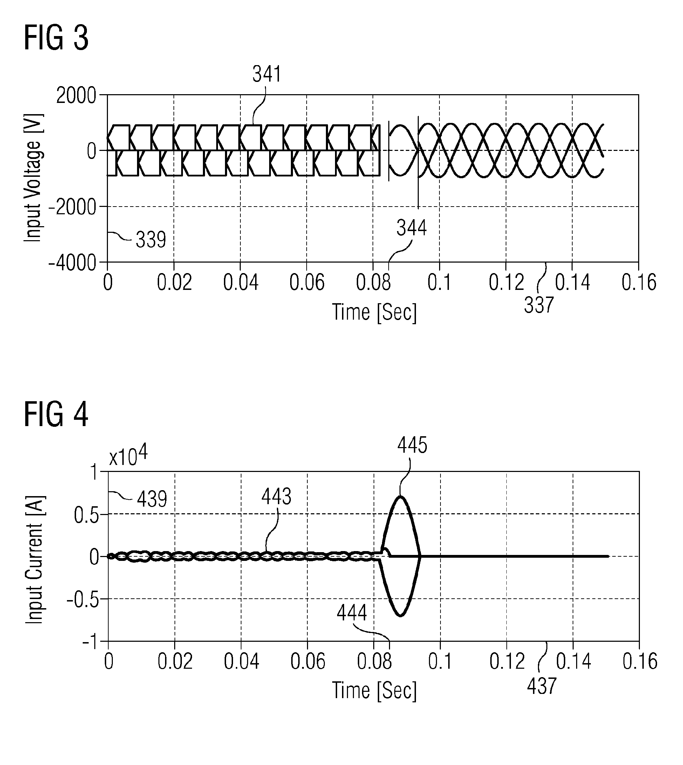

**Figs. 3 and 4** illustrate graphs showing the three-phase AC voltage and currents, respectively before and after the cell short circuit at a time of 0.082 s.

Thereby, on the abscissas 337 and 437, 537, 637, 737 and 837 in Fig. 3 to 8, respectively, the time t is indicated in seconds (s).

On the ordinate 339 in the graph of Fig. 3, the input voltage at the AC input terminals 255, 257 and 259, as depicted in Fig. 2, is indicated as a curve 341, wherein 344 indicates the short circuit.

At the ordinate 439 of the graph illustrated in Fig. 4 the input current as is sensed for example by the current transformers 227 or 229 is indicated as a curve 443. It is apparent that the current steeply increases at the short circuit 444 (t=0.082 s) showing a peak 445. However, the current quickly drops to zero, since the gate control circuit 272 controls the corresponding thyristors to interrupt the current.

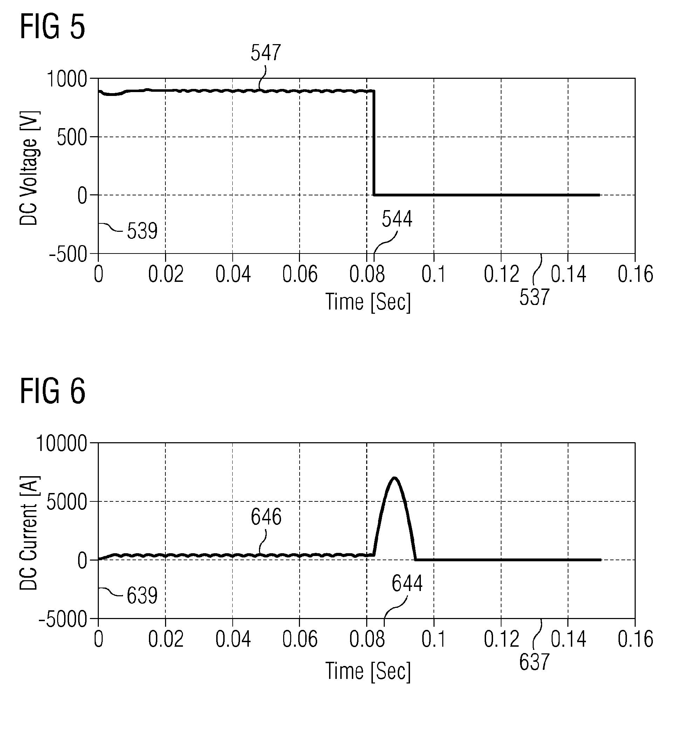

In **Fig. 5** the ordinate 539 of the graph corresponds to the DC voltage as is for example measured between the first DC output terminal 267 and the second DC output terminal 268, as is illustrated in Fig. 2. The DC voltage shows a time course according to a curve 447, wherein a steep drop is observed after the short circuit occurred at the time instance 544 and after the thyristors have interrupted the current flow.

**Fig. 6** depicts on its ordinate 639 the DC current as a curve 646. Close to the short circuit 644, the DC current raises but then drops again to 0.

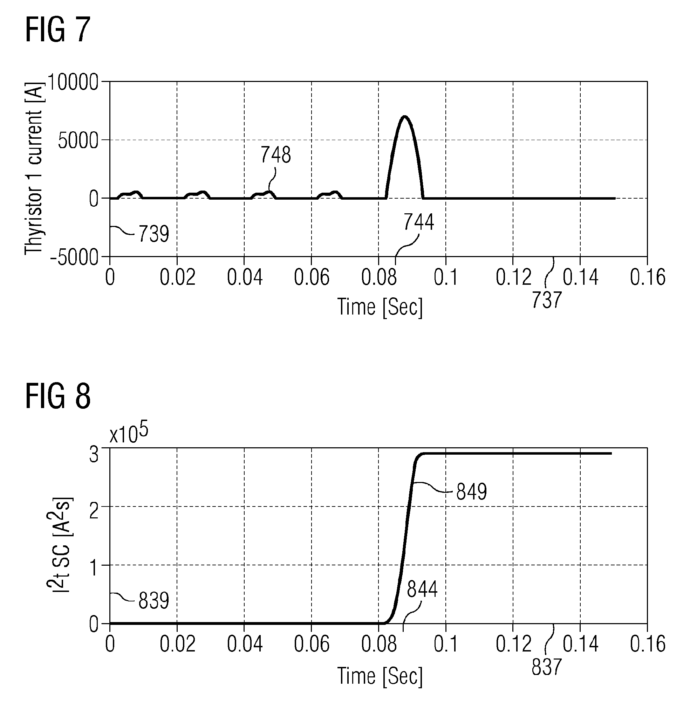

The ordinate 739 of the graph illustrated in **Fig. 7** denotes the current through the first thyristor 261, as illustrated in Fig. 2. The thyristor current is illustrated as a curve 748. Close to the instance of the short circuit 744, the thyristor current shows a peak but then falls to a value of essentially 0.

**Fig. 8** illustrates at its ordinate 839 the I2t value (the square of the current I times the time t) of the short circuit current. As can be seen from Fig. 8, the short circuit current (curve 849) steeply raises at the instance 844 of the short circuit. The thyristor module specifies the max I2t value in the data sheet, in this way the calculated value can be compared to the thyristor module rating and by this check the proper thyristor module can be selected.

For the simulations shown in Figs. 3 to 8 a DC load was used as the base load before the short circuit at t=0.082 s, while in a normal operation this would have been an AC current.

**Fig. 9** schematically illustrates a possible drive topology using the proposed cell as illustrated in Fig. 2, wherein the drive topology 990 illustrated in Fig. 9 is also referred to as power supply arrangement or variable speed drive according to an embodiment of the present invention. The power supply arrangement 990 comprises a first converter arrangement 991, a second converter arrangement 992 and a third converter arrangement 993 which provide each one phase to a motor 994.

A primary winding 995 of an input transformer is inductively coupled to secondary windings 996 which provide their output power to the three AC input terminals 955, 957, 959 corresponding to the AC input terminals 255, 257 and 259 of the AC-AC converter 250 as illustrated in Fig. 2. The converter arrangements 991, 992 and 993 comprise a number of AC-AC converters 950 (which may be similar to the AC-AC converter 250 illustrated in Fig. 2), which are connected in a series, such that a second AC output terminal 985 of one AC-AC converters 950 is connected to a first AC output terminal 984 of another AC-AC converters 950. The primary coils 995 are exited by a primary voltage (22 kV, 50 Hz) which is provided via three-phases 997 to each of the converter arrangements 991, 992, 993. The first AC-AC converters 950 in each of the converter arrangements 991, 992, 993 are connected to each other with their second AC output terminals. Reference sign 994 depicts a load, such as an AC motor, which is supplied with electric energy at variable frequency by the power supply arrangement 990.

Elements 988 denote a precharge windings, elements 998 denote precharge circuits.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Rectifier stage (251) for converting an input AC voltage to an output voltage, the rectifier stage comprising:
a first AC input terminal (255);
a second AC input terminal (257), wherein the input AC voltage is applicable between the first input terminal and the second input terminal;
a first DC output terminal (267);
a second DC output terminal (268);
a first thyristor (261) connected between the first DC output terminal (267) and the first AC input terminal (255);
a second thyristor (263) connected between the first DC output terminal (267) and the second AC input terminal (257);
a gate control circuit (272) adapted and connected to control a first conductance state of the first thyristor (261) and to control a second conductance state of the second thyristor (263) such that the first thyristor and the second thyristor provide a rectified AC voltage between the first DC output terminal (267) and the second DC output terminal (268) as the output voltage,
wherein the gate control circuit has a current signal input terminal (233) for receiving a current signal indicative of a current flowing from the first AC input terminal (255) through the first thyristor (261) to the first DC output terminal (267),
wherein the control circuit is arranged and connected to control, based on the current signal, the first conductance state of the first thyristor.

2. Rectifier stage according to claim 1, further comprising:
a current transformer (227, 229) arranged for sensing the current flowing from the first AC input terminal through the first thyristor for providing the current signal.

3. Rectifier stage according to claim 1 or 2, wherein the first conductance state is controlled by the gate control circuit to be non-conducting, if the current signal indicates that the current is above a current threshold.

4. Rectifier stage according to claim 3, wherein the current signal is further indicative of a further current flowing from the second AC input terminal through the second thyristor to the first DC output terminal.

5. Rectifier stage according to claim 4, wherein, if the current signal indicates that the current and/or the further current is below the current threshold, the gate control circuit (272) controls the first conductance state and the second conductance state such that an amplitude of the rectified AC voltage is constant upon varying an amplitude of the input AC-voltage.

6. Rectifier stage according to one of the preceding claims, wherein the gate control circuit (272) has a further input terminal (228) for electrically or optically receiving information about a variable speed drive (223) which receives electric energy via the rectifier stage (251), wherein the first conductance state is controlled by the gate control circuit to be non-conducting, if the information about the variable speed drive indicates an error relating to the variable speed drive.

7. Rectifier stage according to one of the preceding claims, wherein the gate control circuit (272) is adapted to control the first conductance state and the second conductance state in order to adjust the amplitude of the rectified AC voltage to deviate less than 10 %, in particular less than 5 %, further in particular less than 2 %, from a target amplitude of the rectified AC voltage, when the amplitude of the input AC voltage deviates from a nominal amplitude of the input AC voltage in a range between 10 % and 30 %, in particular between 20 % and 30 %.

8. Rectifier stage according to one of the preceding claims, further comprising:
a capacitor (274) connected between the first DC output terminal (267) and the second DC output terminal (268) for smoothing the rectified AC voltage to generate an output DC voltage as the output voltage,
wherein the gate control circuit (272) is in particular adapted to control the first conductance state and the second conductance state in order to adjust the output DC voltage to deviate less than 10 %, in particular less than 5 %, further in particular less than 2 %, from a target output DC voltage, when the amplitude of the input AC voltage deviates from a nominal amplitude of the input AC voltage in a range between 10 % and 40 %, in particular between 20 % and 40 %.

9. Rectifier stage according to one of the preceding claims, further comprising:
another first thyristor (262) or a first diode connected between the first DC output terminal and the second DC output terminal in series with the first thyristor (261) and connected to the first AC input terminal (255), the first AC input terminal being connected between the first thyristor and the other first thyristor or the first diode; and
another second thyristor (264) or a second diode connected between the first DC output terminal and the second DC output terminal in series with the second thyristor (263) and connected to the second AC input terminal (257), the second AC input terminal being connected between the second thyristor and the other second thyristor or the second diode,
wherein the gate control circuit is further adapted and connected to control another first conductance state of the other first thyristor and to control another second conductance state of the other second thyristor such that the first thyristor, the second thyristor, the other first thyristor and the other the second thyristor together provide the rectified AC voltage between the first DC output terminal and the second DC output terminal.

10. AC-AC converter (250, 950) for converting an input AC-voltage to an output AC-voltage, the AC-AC converter comprising:
a rectifier stage (251) according to one of the preceding claims; and
a AC-converter stage (253) connected between the first DC output terminal and the second DC output terminal of the rectifier stage and comprising a first AC output terminal (284) and a second AC output terminal (285), the AC-converter stage being adapted to convert the output voltage, in particular the output DC voltage, generated by the rectifier stage to the output AC voltage between the first AC output terminal and the second AC output terminal,
wherein the AC-converter stage in particular comprises:
a first controllable switch (280), in particular a first IGBT, connected to the first DC output terminal and to the second DC output terminal; and
a second controllable switch (282), in particular a second IGBT, connected to the first DC output terminal and to the second DC output terminal,
wherein the first controllable switch (280) is connected to the first AC output terminal (284),
wherein the second controllable switch (282) is connected to the second AC output terminal (285).

11. Converter arrangement (991,992,993) comprising a plurality of AC-AC converters (950) according to claim 10, the AC-AC converters (950) being connected in a series, wherein a second AC output terminal (985) of one of the plurality of the AC-AC converters is connected to a first AC output terminal (984) of a next AC-AC converter of the plurality of the AC-AC converters in the series, respectively.

12. Power supply arrangement (990) comprising a first converter arrangement (991) according to claim 11 and a second converter arrangement (992) according to claim 11,
wherein a first AC output terminal (984) of a first AC-AC converter in the series of the first converter arrangement is connected to a first AC output terminal (984) of a first AC-AC converter in the series of the second converter arrangement,
wherein a second AC output terminal (985) of a last AC-AC converter in the series of the first converter arrangement and a second AC output terminal (985) of a last AC-AC converter in the series of the second converter arrangement are connectable to a load (123, 994), in particular a motor.

13. Subsea power grid (100), comprising:
a power cable (111), in particular having a length between 100 km and 300 km, leading from above a sea level to a depth between 1000 m and 2000 m, in particular between 3000 m and 2000 m, below the sea level for supplying electric energy utilizing AC voltage to a subsea equipment; and
at least one rectifier stage (251) according to one of claims 1 to 9, the AC voltage being applied between the first AC input terminal and the second AC input terminal of the rectifier stage, and/or
at least one AC-AC converter (250, 950) according to one of claims 10 and/or
at least one converter arrangement (991, 992, 993) according to claim 11 and/or
at least one power supply arrangement (990) according to claim 12.

14. Method for converting an input AC voltage to an output voltage, the method comprising:
applying the input AC voltage between a first AC input terminal and a second AC input terminal;
controlling a first conductance state of a first thyristor and controlling a second conductance state of a second thyristor such that the first thyristor and the second thyristor provide a rectified AC voltage between a first DC output terminal and a second DC output terminal as the output voltage:
receiving a current signal indicative of a current flowing from the first AC input terminal through the first thyristor to the first DC output terminal; and
controlling, based on the current signal, the first conductance state of the first thyristor,
wherein the first thyristor is connected between the first DC output terminal and the second DC output terminal and is connected to the first AC input terminal,
wherein the second thyristor is connected between the first DC output terminal and the second DC output terminal and is connected to the second AC input terminal.

15. Method according to claim 14, further comprising:
converting the output voltage generated between the first DC output terminal and the second DC output terminal to an output AC voltage;
connecting a load to the output AC voltage,
wherein the controlling step is performed by a gate control circuit, the gate control circuit being part of a variable speed drive which comprises a variable speed drive controller, the gate control circuit having a further input terminal connected to an output terminal of the variable speed drive controller.
